# EUROPEAN PATENT APPLICATION

(11) **EP 2 975 494 A1**
(43) Date of publication of application: **20.01.2016**
(21) Application number: 15174606.2
(22) Date of filing: 30.06.2015
(51) Int. Cl.: G06F 3/01

(54) **SELF CALIBRATION FOR HAPTIC DEVICES**

(30) Priority: 14.07.2014 US 201414331000
(71) Applicant: Immersion Corporation, San Jose, CA 95134 (US)
(72) Inventor: STÅHLBERG, Kurt-Eerik, Montreal, Québec QC H2W 2R2 (CA)
(74) Representative: Hofstetter, Schurack & Partner

(57) **Abstract**

Systems, methods and apparatuses using feedback from internal sensors to adjust haptic effect output are provided.. In an embodiment, a method of generating a haptic output effect in an apparatus with a haptic effect output device is provided. A haptic effect output initiates with the haptic effect output device. The method includes receiving feedback data from an input sensor. The method compares feedback data from the input sensor to expected results of the haptic effect output. The method adjusts operating parameters of the haptic effect output device. The haptic effect output continues.

## Description

### FIELD

An embodiment is directed generally to a user interface for a device, and in particular to producing a dynamic haptic effect using feedback from sensors to determine operation of the haptic effect.

### BACKGROUND

Electronic device manufacturers strive to produce a rich interface for users. Conventional devices use visual and auditory cues to provide feedback to a user. In some interface devices, kinesthetic feedback (such as active and resistive force feedback) and/or tactile feedback (such as vibration, texture, and heat) is also provided to the user, more generally known collectively as "haptic feedback" or "haptic effects". Haptic feedback can provide cues that enhance and simplify the user interface. Specifically, vibration effects, or vibrotactile haptic effects, may be useful in providing cues to users of electronic devices to alert the user to specific events, or provide realistic feedback to create greater sensory immersion within a simulated or virtual environment.

In order to generate haptic effects, many devices utilize some type of actuator or haptic effect output device. Typically, these haptic effect output devices have provided a vibration or vibrotactile effect. However, it may be useful to provide effects calibrated to achieve a desired or expected result. Vibration effects lose effectiveness when provided either too strongly or too weakly. An effect which is too strong may be annoying or disruptive. An effect which is too weak may not be noticeable.

Moreover, traditional architectures that provide haptic feedback with triggered effects are available. However, environmental and other factors may change operation of haptic feedback by changing the output effect of haptic effect output devices. As a result, the correlation of expected feedback to actual haptic feedback may be inconsistent, and therefore less compelling to the user. Environmental effects may magnify or dampen haptic effects, for example, or otherwise enhance or reduce haptic effects. Changing component quality over time, such as from wear and tear, may further change haptic effects. Providing for a system which corrects for changing conditions may thus be useful in enhancing user experience.

Therefore, there is a need for an improved system of providing a haptic effect that includes feedback from sensors in the process of operating haptic effect output devices.

### SUMMARY

Systems, methods and apparatuses using feedback from internal sensors to adjust haptic effect outputs are provided. In an embodiment, a method of generating a haptic output effect in an apparatus with a haptic effect output device is provided. A haptic effect output initiates with the haptic effect output device. The method includes receiving feedback data from an input sensor. The method compares feedback data from the input sensor to expected results of the haptic effect output. The method adjusts operating parameters of the haptic effect output device. The haptic effect output continues.

In an embodiment, a method of generating a haptic output effect in an apparatus having a haptic effect output device, a first input sensor and a second input sensor is provided. The method receives user input at a first input sensor and initiates a haptic effect output with the haptic effect output device responsive to the user input. The method receives feedback data from the second input sensor and compares feedback data from the second input sensor to expected results of the haptic effect output. Additionally, the method adjusts operating parameters of the haptic effect output device and continues the haptic effect output. The method repeats the receiving feedback data, comparing feedback data, adjusting operating parameters and continuing the haptic effect output. The method also determines user input at the first input sensor has ended and stops the haptic effect output.

In an embodiment, a haptic effect enabled device is provided. The device includes a haptic effect output device. The device also includes a processor coupled to the haptic effect output device. The device further includes a sensor coupled to the processor. The sensor is configured to measure data including data resulting from operation of the haptic effect apparatus. The processor is configured to manage the haptic effect output device and to receive data from the sensor. The processor is also configured to determine an effect of the haptic effect output device on sensor readings and to adjust operation of the haptic effect output device responsive to the effect determined from sensor readings.

In an embodiment, a method of generating a haptic output effect in an apparatus having a haptic effect output device is provided. The method initiates a first haptic effect output with the haptic effect output device. The method receives feedback data from an input sensor. The method compares feedback data from the input sensor to expected results of the first haptic effect output. The method adjusts operating parameters of the haptic effect output device.

In an embodiment, a method of generating a haptic output effect in an apparatus having a haptic effect output device is provided. The method initiates a first haptic effect output with the haptic effect output device and receives feedback data from an input sensor. The method compares feedback data from the input sensor to expected results of the first haptic effect output and adjusts operating parameters of the haptic effect output device. The method terminates the first haptic effect output. Additionally, the method initiates a second haptic effect output with the haptic effect output device. The second haptic effect output occurs based on the adjusted operating parameter of the haptic effect output device as adjusted responsive to feedback data. The method receives feedback data from the input sensor. The method compares feedback data from the input sensor to expected results of the second haptic effect output and adjusts operating parameters of the haptic effect output device.

In an embodiment, a method of generating a haptic output effect in an apparatus which has a haptic effect output device is provided. The method initiates a first haptic effect output with the haptic effect output device. The method receives feedback data from an input sensor. The feedback data relates at least in part to the first haptic effect output. The method compares feedback data from the input sensor to expected results of the first haptic effect output. The method adjusts operating parameters of the haptic effect output device responsive to comparing.

In an embodiment, a method of generating a haptic output effect in an apparatus having a haptic effect output device is presented. The method initiates a first haptic effect output with the haptic effect output device. The method receives data from an input sensor of the apparatus. The method compares data from the input sensor to expected results of the input sensor. The method adjusts operating parameters of the haptic effect output device responsive to the comparing.

### BRIEF DESCRIPTION OF THE DRAWINGS

The present invention is illustrated by way of example in the accompanying drawings. The drawings should be understood as illustrative rather than limiting.
Figure 1 illustrates an embodiment of a process of operating a haptic effect output device.
Figure 2 illustrates an embodiment of a process of operating a haptic effect output device.
Figure 3A illustrates operation of a haptic effect output device in an embodiment.
Figure 3B illustrates operation of a haptic effect output device with adjustments in an embodiment.
Figure 4A illustrates operation of a haptic effect output device in an embodiment.
Figure 4B illustrates operation of a haptic effect output device with adjustments in an embodiment.
Figure 5 illustrates an embodiment of an apparatus including a haptic effect output device.
Figure 6 illustrates an embodiment of an apparatus such as a tablet computer including a haptic effect output device.
Figure 7 illustrates an embodiment of an apparatus such as a mobile device including a haptic effect output device.
Figure 8 further illustrates the embodiment of an apparatus of Figure 7.
Figure 9 illustrates an embodiment of an apparatus such as a wearable apparatus including a haptic effect output device.
Figure 10 illustrates an embodiment of a process of operating a handwriting sensitive apparatus including a haptic effect output device.
Figure 11 illustrates an embodiment of a process of operating a gesture sensitive apparatus including a haptic effect output device.
Figure 12 illustrates an embodiment of a process of operating an apparatus including a haptic effect output device with feedback to the haptic effect output device.
Figure 13 illustrates an embodiment of a process of operating an apparatus including a haptic effect output device with feedback to the haptic effect output device.
Figure 14 illustrates an embodiment of a process of operating an apparatus including a haptic effect output device with feedback from the haptic effect output device.
Figure 15 illustrates an embodiment of a system including multiple apparatuses with a haptic effect output device.
Figure 16 illustrates an embodiment of an apparatus including a haptic effect input and output device.

### DETAILED DESCRIPTION

Systems, methods and apparatuses is provided for self-calibration for haptic devices. Systems, methods and apparatuses use feedback from internal sensors to adjust haptic effect output in various embodiments. The specific embodiments described in this document represent exemplary instances of the present invention, and are illustrative in nature rather than restrictive.

In the following description, for purposes of explanation, numerous specific details are set forth in order to provide a thorough understanding of the invention. It will be apparent, however, to one skilled in the art that the invention can be practiced without these specific details. In other instances, structures and devices are shown in block diagram form in order to avoid obscuring the invention.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment, nor are separate or alternative embodiments mutually exclusive of other embodiments.

Providing feedback to users enhances user experience of technology. Technology progressed from batch input with essentially no feedback to visual feedback in the form of appearance of characters on a computer screen responsive to input from a keyboard. More recently, TouchSense® technology available from Immersion Corp. of San Jose, California provides for tactile feedback responsive to user input using haptic effect output devices. TouchSense® provides one example of a touch player.

Examples of haptic effect output devices may include an electromagnetic actuator such as an Eccentric Rotating Mass ("ERM") in which an eccentric mass is moved by a motor, a Linear Resonant Actuator ("LRA") in which a mass attached to a spring is driven back and forth. Haptic effect output devices also broadly include non-mechanical or non- vibratory devices such as those that use electrostatic friction (ESF), ultrasonic surface friction (USF), or those that induce acoustic radiation pressure with an ultrasonic haptic transducer, or those that use a haptic substrate and a flexible or deformable surface, or those that provide projected haptic output such as a puff of air using an air jet, as well as electromagnetic actuators, and so on. These haptic effect output devices may have a stretch effect, among other effects, and may produce multiple types of haptic effects alone or in combination with other haptic effect output devices.

However, providing feedback on devices with haptic effect output devices requires specific tailoring of output effects to the capabilities of the components generating haptic effect output. Even in such circumstances, changes in environment or altered performance of components can alter characteristics of haptic effect output. Thus, evaluating performance of haptic effect output devices as such performance occurs allows for corrected or altered operation of haptic effect output devices. In particular, this allows for closer to uniform operation of haptic effect output devices in varying environments and after changes in performance during the lifecycle of a haptic effect output device.

In an embodiment, an algorithm uses a device's built-in sensor(s) to measure how strongly the device vibrates or otherwise moves in reality and uses this information to adjust the strength of the haptic effect output. This allows for vibration strength or other haptic effect magnitude for a subtle effect at a desired level. If the device vibrates or operates too strongly it feels unpleasant and if the device vibrates or operates too weakly the user may feel the effect too weakly or may not feel it at all. Feedback in the form of sensor data allows for adjustment of operating parameters of the haptic effect output device during operation, or for subsequent operation.

In another embodiment, an algorithm uses the device's built-in sensors to measure how strongly the device is vibrating in reality and uses this information to adjust the strength of the effect output during operation. Vibration strength for a subtle but long duration effect thus operates at the desired level. Feedback from the sensor data allows for essentially continuous adjustment of output to reach expected sensor data values.

Both of these described embodiments further allow for calibration of devices where initial information about components is somewhat uncertain. For example, one can provide expected output in diverse types of devices or systems by measuring output and adjusting operating parameters accordingly. Thus, one can adapt a technology such as TouchSense or another touch player to devices without requiring specialized design for specific devices or specific combinations.

In an embodiment, implementation of this feedback process occurs through use of a library accessed by a developer. Thus, a developer can incorporate feedback from onboard sensors explicitly and can monitor results. In another embodiment, internal processes link continuous or repeated effects of haptic effect output devices to sensor data of devices, allowing for automatic adjustment operating parameters of haptic effect output devices without requiring developer or other monitoring of the processes.

In an embodiment, a process uses internal sensor(s) to measure when a haptic effect is at a distinguishable level of strength. The process alters the level of strength of haptic effect output, scaling it based on internal sensor data. In the case of multiple internal sensors, differential readings may allow for greater sensitivity to haptic effect output signals, producing more accurate changes to strength levels.

As an example, a software developer starts with an effect at a desired level Gs. The system starts based on a magnitude value expected to lead to the desired Gs value, sending the Gs value to a haptic effect subsystem such as A touchplayer. Then the system measures sensor data to determine if the actual vibration of the device is near the desired Gs. If the vibration measures too strong, the system lowers the magnitude value sent to A touchplayer and if the vibration measures too weak the system raises the magnitude value sent to A touchplayer. Preferably, this process reduces disturbance to a user, such as by smoothing changes in magnitude, for example.

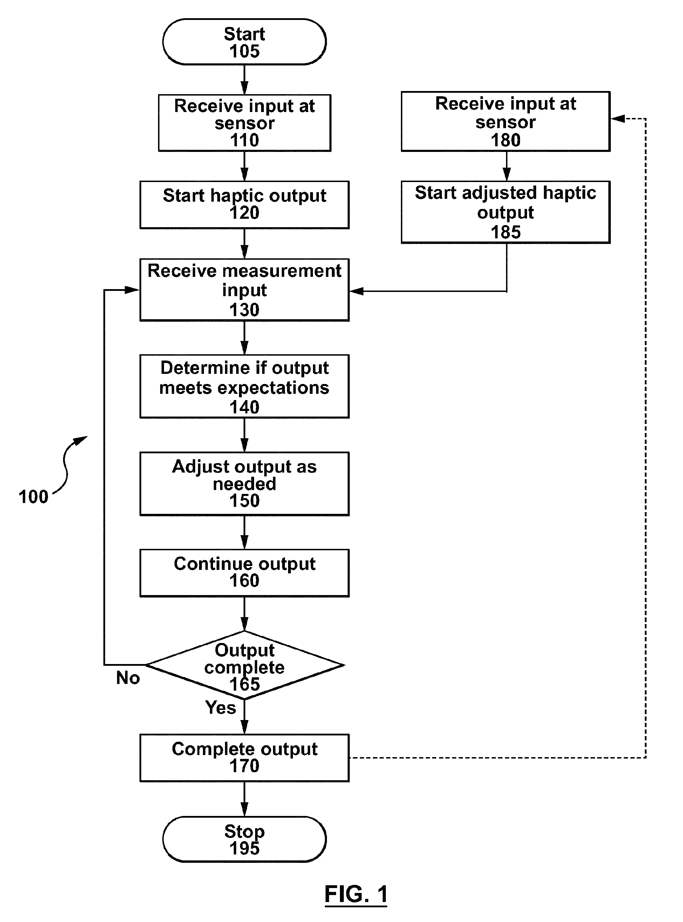

Figure 1 illustrates an embodiment of a process of operating a haptic effect output device. Process 100 initiates at start module 105. At module 110, the process receives user input at a sensor. This may be, for example, touch- based, gesture- based, or other user input. At module 120, haptic output initiates responsive to the user input of module 110. At module 130, a sensor receives measurement input responsive to the haptic output of module 120. Such a sensor may be an accelerometer or a strain gauge, for example. The process then determines at module 140 whether the haptic output of module 120 meets expectations based on the measurement input of module 130. The process adjusts the haptic output module 150 based on the determination of module 140. The haptic output continues at module 160 based on the adjusted output of module 150. If the output is complete, the process ends the haptic output at module 170. The process may then terminate at module 195.

If the output was not completed at module 165, the process returns to module 130 and receives further measurement input. The process will then loop through additional modules 140, 150 and 160 as necessary. Additionally, once haptic output is completed at module 170, the process may restart with receipt of input at a user-interface at module 180. Haptic output then initiates based on adjusted output levels of previous iterations of process 100 from module 150. The process then proceeds through measurement input, comparison to expectations, adjustment, and continuation of output of modules 130, 140, 150 and 160.

As an example, one may start a process at a high level at module 120, receiving data indicating the level is too high at module 130. The determination of module 140 indicates the necessary correction, lowering the magnitude. At module 150, the output level lowers as the adjustment, and the output continues. Since output continues at module 165, the process returns to module 130, where measurement again occurs, this time with a value indicating output is too low. At module 140, the process determines to raise the output level, and the adjustment occurs at module 150, with output continuing at module 160 at a level higher than the previous iteration where it was too low, but lower than the first iteration where it was too high. A system such as A touchplayer or some other system for haptic output effects may provide these outputs and may either internally monitor the output or may allow for developer control of the monitored output. In some embodiments, internal monitoring may be provided with the option for external control of the monitoring process as well.

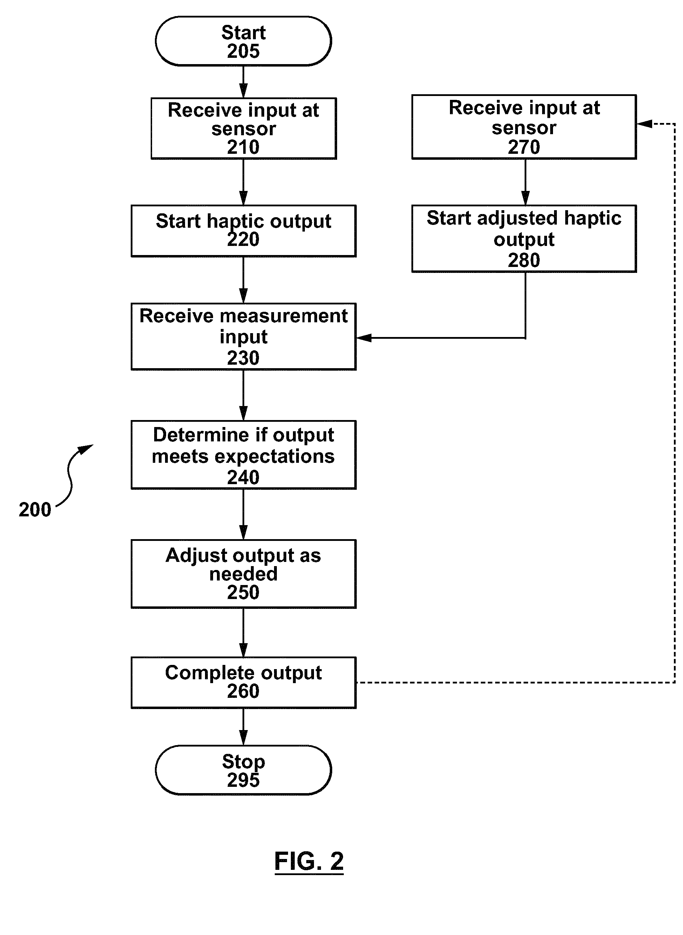

Other types of output processes may also benefit from feedback to haptic effect output devices. Figure 2 illustrates an embodiment of a process of operating a haptic effect output device. Process 200 initiates at start module 205. At module 210, the process receives user input at a sensor. This may be, for example, touch- based, gesture- based, or other user input. At module 220, haptic output initiates responsive to the user input of module 210. At module 230, a sensor receives measurement input responsive to the haptic output of module 220. Such a sensor may be an accelerometer or a strain gauge, for example. The process then determines at module 240 whether the haptic output of module 220 meets expectations based on the measurement input of module 230. The process adjusts the haptic output module 250 based on the determination of module 240. The haptic output completes at module 260. The process may then terminate at module 295.

Once haptic output is completed at module 260, the process may restart with receipt of input at a user-interface at module 270. Haptic output then initiates at module 280 based on adjusted output levels of previous iterations of process 200 from module 250. The process then proceeds through measurement input, determination of expectations, adjustment, and completion of output of modules 230, 240, 250 and 260.

As an example, one may start a process at a high level at module 220 responsive to user input at module 210, and receiving data indicating the level is too high at module 230. The determination of module 240 indicates the necessary correction, lowering the magnitude. At module 250, the output level lowers as the adjustment. If the output is relatively short, the output completes at module 260. The process flows to module 270, where user input again occurs, leading to adjusted output at module 280. Measurement again occurs, this time with a value indicating output is too low. At module 240, the process determines to raise the output level, and the adjustment occurs at module 250, placing the output lower than the initial level of module 220 but higher than the previous level. With the output relatively short, the output completes at module 260. The process flows again to module 270, where user input again occurs, leading to further adjusted output at module 280. Measurement again occurs, this time with a value indicating higher than desired output. At module 240, the process determines to lower the output level, and the adjustment occurs at module 250, placing the output lower than the previous level but higher than the level from the next previous level.

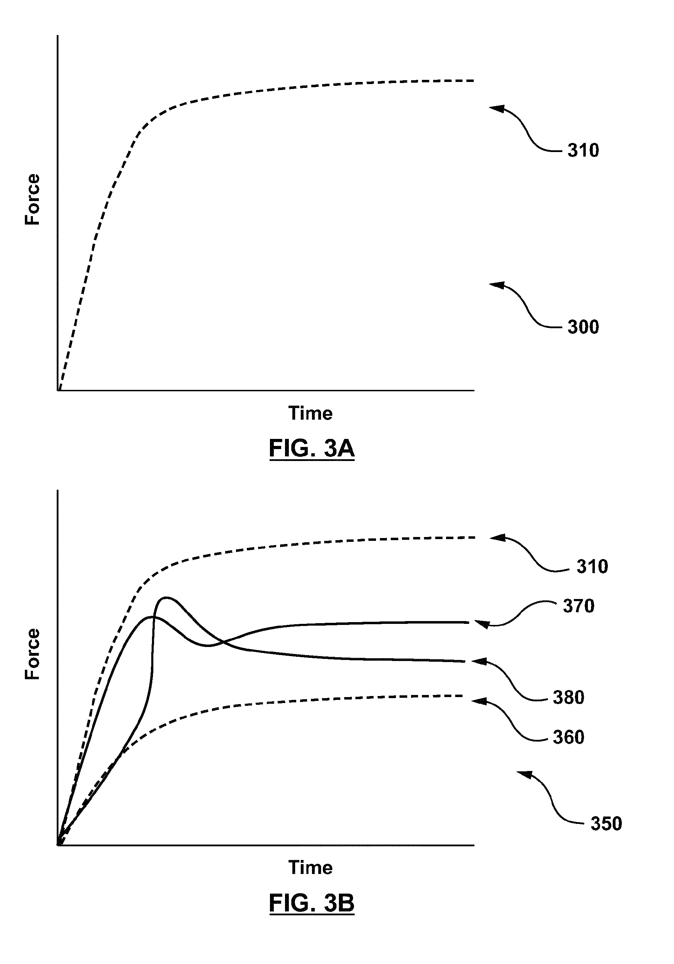

Figure 3A illustrates operation of a haptic effect output device in an embodiment. As shown, output curve 310 shows the output of a haptic effect output device without correction in an embodiment. Figure 3B illustrates operation of a haptic effect output device with adjustments in an embodiment. Output curve 310 compares with output curve 360, which provides output at a lower magnitude without correction. Additionally, corrected output curves 370 and 380 provide output with corrected magnitudes varying over time. Output curve 370 illustrates an initially high magnitude, lowered early in the process and then raised to a magnitude lower than the initial magnitude. Output curve 380 illustrates an initially lower magnitude, raised to a higher magnitude and then lowered to a level between the higher magnitude and the initially lower magnitude. The changes in magnitude reflect changes resulting from measurements of actual output as compared to expected output level.

As an example, a first invocation of a haptic effect output would be at curve 310, and would occur without correction. A second invocation, based on the value of curve 310 being too high, would be at curve 360, and would also occur without correction. This may reflect a situation where the lower value produces an effective result. A third invocation, based on the value of curve 360 being too low, would be at curve 370, with an initially high magnitude corrected too low and then raised to an intermediate level. This might result from an attempt to provide an intermediate effect between curves 310 and 360, or from observed changes in output. A fourth invocation, based on the value of curve 370 still being too high, would be at curve 380, with an initially lower value, corrected higher and then corrected to a lower intermediate level. This might also result from an attempt to provide an intermediate effect between curves 310 and 370, or from observed changes in output levels, for example. The output curve 370 may correspond to the example of Figure 2, for example.

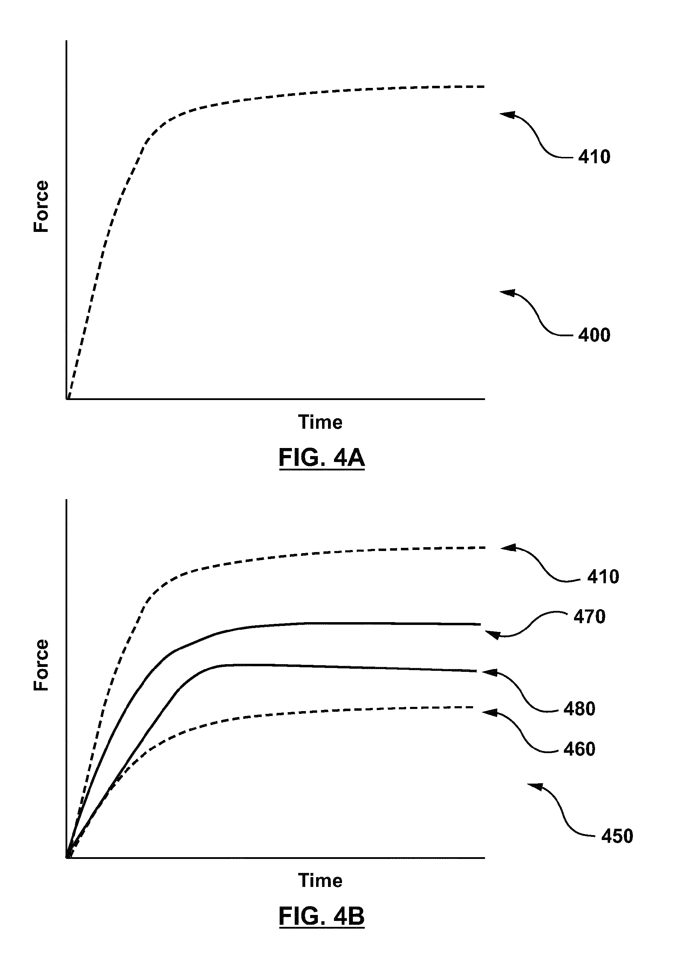

Figure 4A illustrates operation of a haptic effect output device in an embodiment. Output curve 410 represents output at an initially high magnitude without correction. Figure 4B illustrates operation of a haptic effect output device with adjustments in an embodiment. Output curve 410 compares with output curve 460, which provides output at a lower magnitude without correction. Additionally, corrected output curves 470 and 480 provide output with corrected magnitudes. Output curve 460 provides a curve at an initially lower magnitude, which may be an expected magnitude, or may result from correction of the result of the output of output curve 410. Output curve 470 provides a corrected output curve with a magnitude below that of output curve 410 and greater than that of output curve 460. Output curve 480 provides yet another output curve with a magnitude lower than that of output curve 470 but greater than that of output curve 460.

As an example, a first invocation of a haptic effect output would be at curve 410. A second invocation, based on the value of curve 410 being too high, would be at curve 460. A third invocation, based on the value of curve 460 being too low, would be at curve 470. A fourth invocation, based on the value of curve 470 still being too high, would be at curve 480. The sequence of curves illustrated here (410, 460, 470 and 480) may correspond to the example of Figure 1, for example.

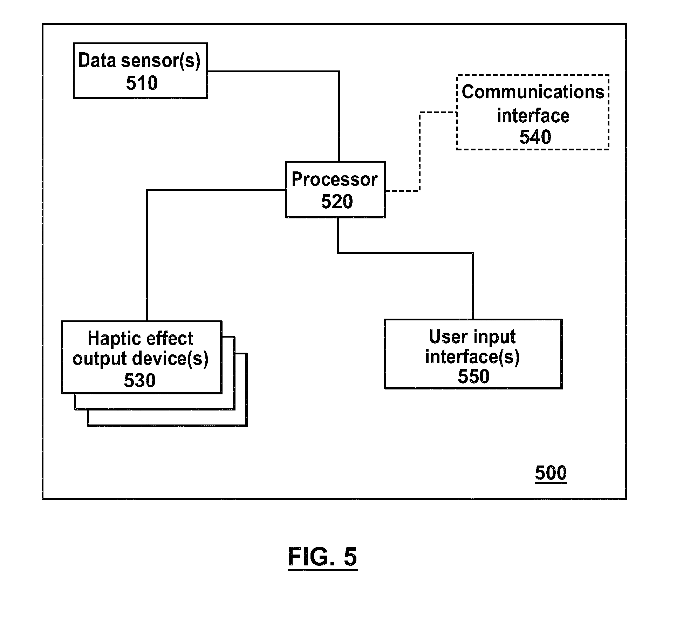

Various devices, systems or apparatuses may be used with the processes as described. Figure 5 illustrates an embodiment of an apparatus including a haptic effect output device. One can implement the processes of Figures 1 and 2 on a variety of devices. Device 500 illustrates an example of one such device, which may have haptic effect output devices, use a user input device and use a sensor for feedback of data from the haptic effect output devices. Data sensor 510 senses input based on environmental factors, for example an accelerometer which senses motion, an optical sensor, or a strain gauge. Processor 520 and processors in general discussed in this document, may be microprocessors, microcontrollers, or other devices or apparatuses capable of processing instructions and executing a method or process based on receipt of electrical inputs and dispatch of electrical outputs using a single core or multiple cores, for example. Processor 520 receives input from sensor 510, potentially in a translated or converted form. Processor 520 is also linked to haptic effect output devices 530, which may provide for haptic effect outputs in various forms.

Note that only one haptic effect output device 530 may exist in the device 500, or multiple devices 530 may be present. Examples of haptic effect output devices may include those mentioned previously in this document and other haptic effect output devices as well. In some embodiments, haptic effect output devices may provide internal feedback in a device or system, such as by providing a return code or signal of some form. Such a return code or signal may provide success or failure information, for example, or it may provide other diagnostic information, as another example.

Communications port 540 provides for communications with other devices or systems, and may be provided in device 500 in various embodiments. Not shown, but also an option, system 500 may include a user interface. Such a user interface may include one or more of a touch screen interface, a touch-sensitive interface, a handwriting interface, a motion sensor, or some other form of user interface. Communications port 540 may provide for communication with an external user interface in a related component or system as well.

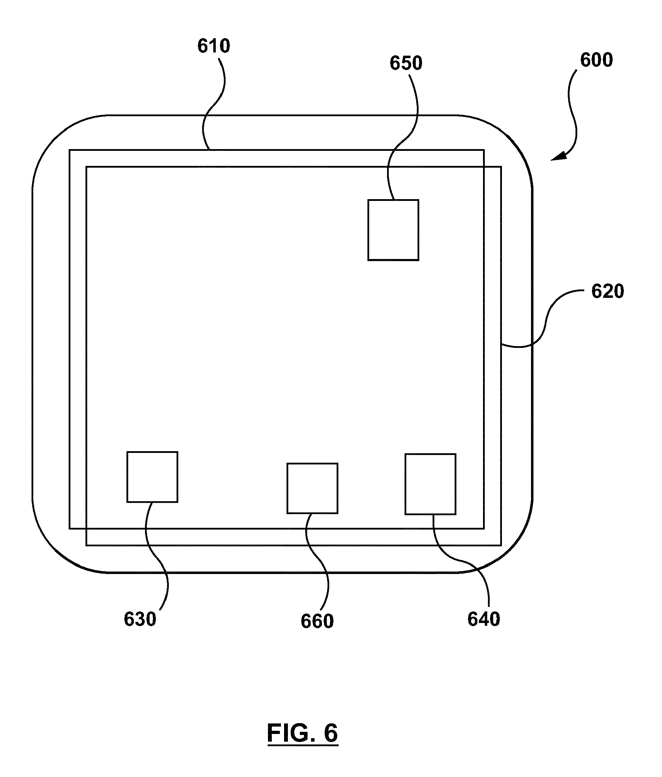

Another system or device which may implement these processes may include a tablet computer. Figure 6 illustrates an embodiment of an apparatus such as a tablet computer including a haptic effect output device. Device 600 provides a device with a display screen, touch-sensitive user interface, sensor(s), and haptic effect output devices. Surface output 610 provides a display screen and may provide other forms of output as well, such as stretch-based haptic effects, for example. Coextensive with output 610, user interface 620 provides for user input via touch-sensitive sensor input. Thus, user interface 620 provides for a touch sensitive response to interaction with the surface provided by surface output 610. Input sensor 660 senses motion of the device 600, and is illustrated as an acceleration sensor. Input sensor 660 may be of various types, such as an accelerometer or strain gauge, for example, and may allow for various types of data input. Haptic effect output devices 630, 640 and 650 provide haptic effect output alone or in combination together. Device 600 may also include, for example, an internal processor and/or a communications port.

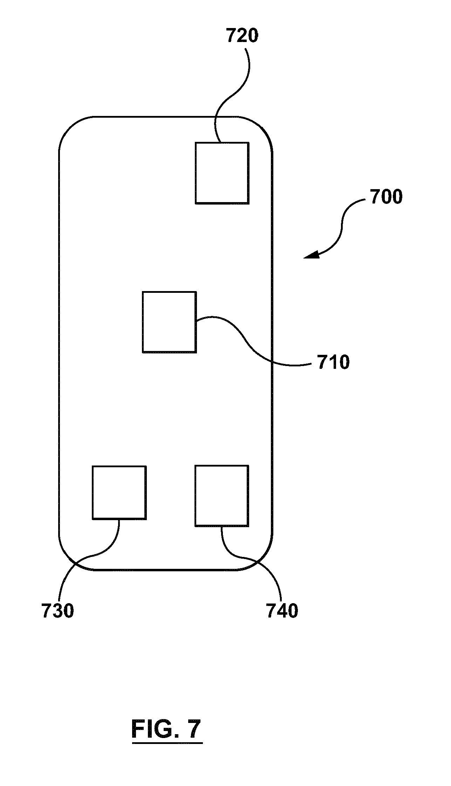

Yet another device which may implement such processes is a mobile device. Figure 7 illustrates an embodiment of an apparatus such as a mobile device including a haptic effect output device. Other examples of devices may also be used with the processes of Figures 1 and 2, for example. Device 700, as illustrated, includes a sensor 710, and haptic effect output devices 720, 730 and 740. Haptic effect output devices 720, 730 and 740 may take various different forms such as those described with respect to output devices 530 of figure 5. Not shown is an internal microprocessor or microcontroller, which may be present. Alternatively, in some embodiments, device 700 may have a communications port coupled to each of the illustrated components which allows for communication between components of device 700 and an external controller. Additionally, some embodiments may have both an internal microprocessor or microcontroller and a communications port, allowing for local control and communications with external devices.

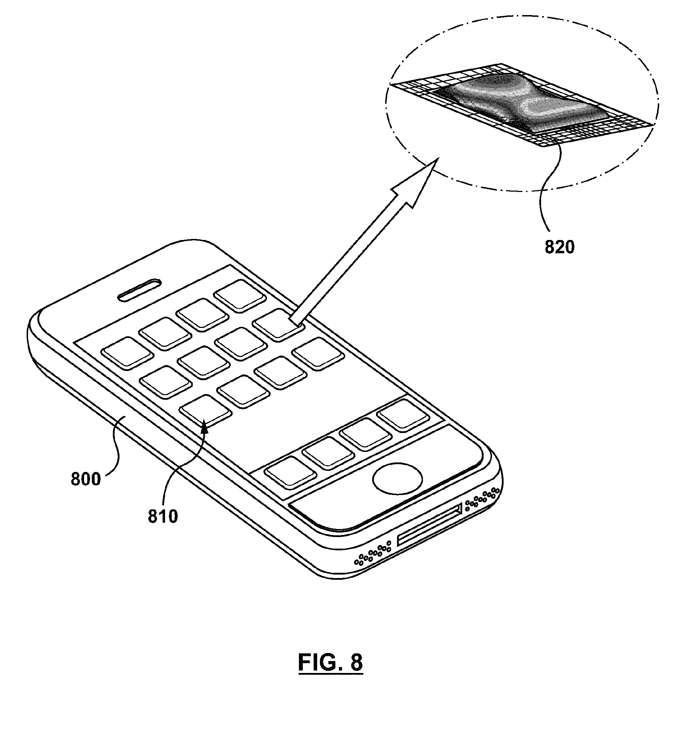

Figure 8 further illustrates the embodiment of an apparatus of Figure 7. Apparatus 800, which may be a mobile phone, for example, includes a touch-sensitive user interface, among other components. Touch-sensitive user-interface 810 is shown as it may be perceived by a user, for example, with an underlying display and a top surface accessible by the user. Representation 820 illustrates configuration of an output device which forms part of the user interface 810. The output device is configured to simulate the feel of the illustrated icons of interface 810, as portrayed in representation 820. Moreover, a touch-sensitive layer or sensor overlays the stretch output device, allowing for sensing of touch-related data such as user input which results from user interaction with the display and touch output of the stretch haptic effect output device. Thus, a user may have a sense of what the displayed icons would feel like to the touch, and may interact with the device thereby. One may also incorporate a touch-sensitive display screen without the stretch output component.

One can implement the processes of figures 1 and 2 using the devices of figures 5, 6, 7 and 8, for example. Thus, one can receive input at user interface 810, have that input processed, and provide an output using one or more of haptic effect output devices 720, 730 and 740. Moreover, one can then receive data through sensor 710, determine if the haptic effect output devices perform properly, and adjust haptic effect output as a result. Similarly, one can receive input at user interface 550, have that input processed at processor 520, and provide an output using one or more of haptic effect output devices 530. One can then receive data from sensor(s) 510, determine if haptic effect output devices 530 perform as expected, and adjust output accordingly.

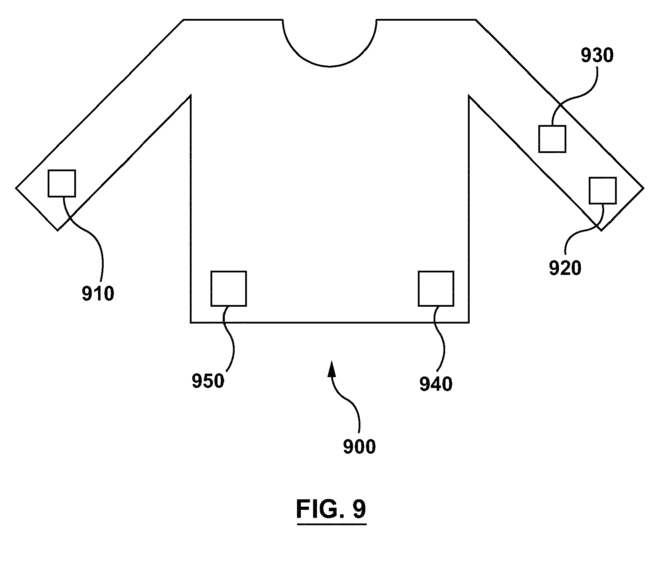

Still another apparatus or system potentially using the processes described herein includes a wearable system. Figure 9 illustrates an embodiment of an apparatus such as a wearable apparatus including a haptic effect output device. Device 900 provides a garment with control surfaces and haptic effect output devices. Control surface 910 is a user interface, which may be measured by a processor integral to the garment or in communication with the garment, for example. Control surface 910 may provide a user interface and haptic effect output device, which provides for input and for output which modifies the sensation of the control surface for the user. Acceleration sensor 920 measures motion of garment 900. Surface 930 provides a haptic effect output device which provides output that a user may sense, for example. Device 940 provides haptic effect output as well. As with control surface 910, each of surface 920, surface 930 and device 940 may be controlled by a local processor or a processor external to garment 900, for example. Garment 900 may also be expected to include communications port 950 to allow for communication with other devices. Communications port 950 may be expected to connect to or couple with surfaces 910, 920 and 930, along with device 940, for example. One may sense user input at control surface 910, provide haptic effect output with devices such as device 930 and/or device 940, for example, receive motion input at sensor 920, and adjust haptic effect output accordingly. Moreover, multiple control surfaces, surfaces (output), and output devices may be included, for example, along with other types of input devices (sensors), for example.

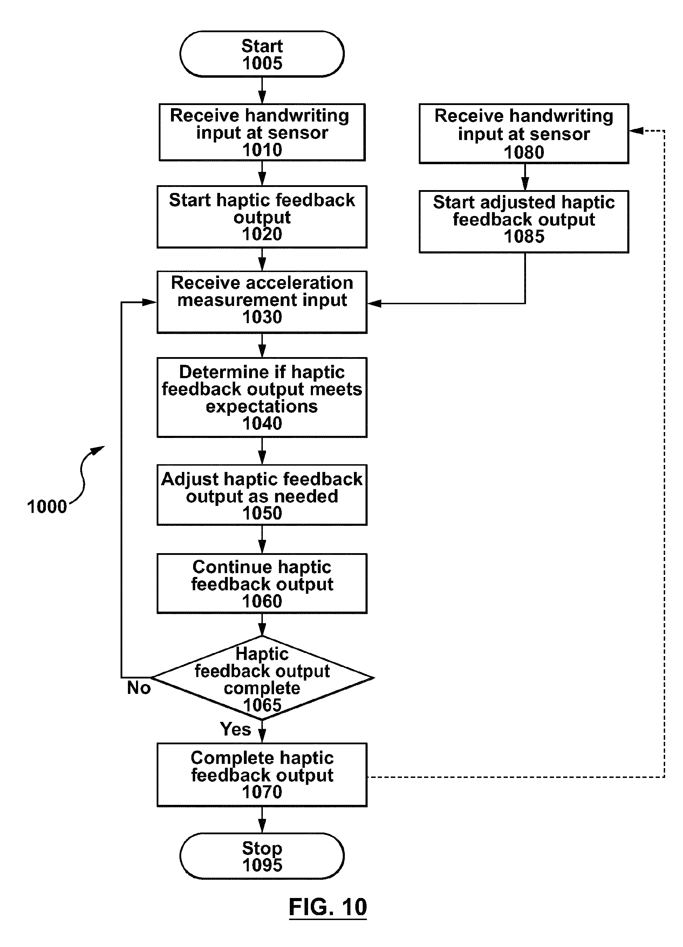

For handwriting processes, the long duration of handwriting input and corresponding haptic effect output may allow for correction of such haptic effect output. Figure 10 illustrates an embodiment of a process of operating a handwriting sensitive apparatus including a haptic effect output device. Process 1000 initiates at start module 1005. At module 1010, the process receives user handwriting input. At module 1020, haptic output initiates responsive to the handwriting input of module 1010. At module 1030, an accelerometer receives measurement input responsive to the haptic output of module 1020. The process then determines at module 1040 whether the haptic output of module 1020 meets expectations based on the measurement input of module 1030. This may involve measurement over a substantial period of time to determine effects specific to the haptic output of module 1020, and thereby to filter out background noise. The process adjusts the haptic output module 1050 based on the determination of module 1040. The haptic output continues at module 1060 based on the adjusted output of module 1050. If the output is complete, the process ends the haptic output at module 1070. The process may then terminate at module 1095.

If the output was not complete at module 1065, the process returns to module 1030 and receives further measurement input. The process then loops through modules 1040, 1050 and 1060 as necessary. Additionally, once haptic output is complete at module 1070, the process may restart with receipt of input at a user-interface at module 1080. Haptic output then initiates at module 1085 based on adjusted output levels of previous iterations of process 1000 from module 1050. The process then proceeds through measurement input, determination of expectations, adjustment, and continuation of output of modules 1030, 1040, 1050 and 1060 as before.

In such an embodiment, the process uses an accelerometer to measure when the continuous haptic effect is at a distinguishable level of strength. The process uses that information to scale a haptic control signal to make sure the haptic output avoids a level too strong while maintaining a level strong enough for user sensation.

As an example, a software developer starts with an effect at a desired acceleration level Gs. The system initiates haptic effect output based on a magnitude value expected to produce the desired Gs acceleration value, sending the Gs value to a haptic effect subsystem such as A touchplayer. Then, the system measures accelerometer data to determine if the actual vibration of the device achieves the desired Gs. If the acceleration value measures too strong, the system lowers the magnitude value sent to A touchplayer and if the acceleration value measures too weak the system raises the magnitude value sent to A touchplayer. Preferably, this process reduces disturbance to a user, such as by smoothing changes in magnitude, for example.

A further example, wherein g represents gravitational acceleration of 9.8 m/s², may include:
Requesting an effect with 0.5g.
Calling A touchplayer with magnitude 4000.
Measuring accelerometer data implying the device actually vibrates at 0.8g.
Calling or updating A touchplayer with a modified magnitude value of 2500.
Measuring accelerometer data implying the device vibration cannot be felt by the user.
Calling or updating A touchplayer with a modified magnitude value of 3000.

The measurement and adjustment modules may then continue until the effect is eventually stopped or the process finds a sufficiently accurate value.

Such an embodiment applies to longer duration effects but not to any quick "button click confirmation" type effects. The limit of applicable effect duration is not known, and may vary depending on available sensors, quality of sensors, operational environment, sampling speed and other factors. In some embodiments, this limitation arises from a need to gather more than a fraction of a second's worth of acceleration data to be able use filters to get a usable signal out of all of the noise in raw accelerometer data. Other embodiments may provide cleaner data, allowing for use with short duration effects. The live calibration may work in this particular embodiment because a handwriting or drawing effect is continuous and the measurement can thus be over a long period of time.

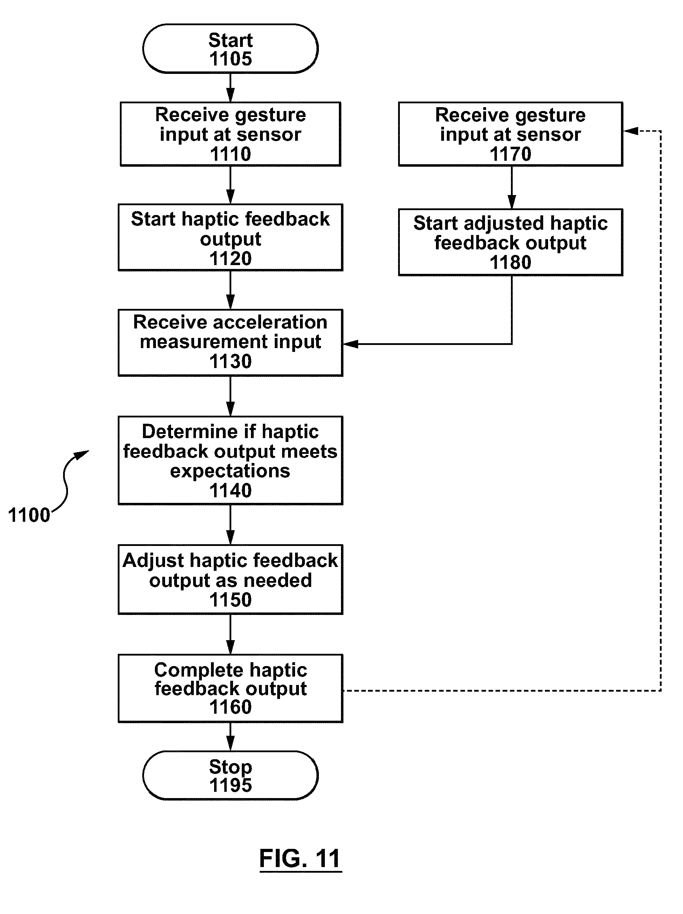

This type of process may also provide better haptic effect outputs in gesture sensitive devices, for example. Figure 11 illustrates an embodiment of a process of operating a gesture sensitive apparatus including a haptic effect output device. Process 1100 initiates at module 1105. At module 1110, the process receives user input at a sensor. This may be, for example, touch- based, gesture- based, or other user input. At module 1120, haptic output initiates responsive to the gesture input of module 1110. At module 1130, a sensor receives acceleration input responsive to the haptic output of module 1120. The process determines at module 1140 whether the haptic output of module 1120 meets expectations based on the acceleration input of module 1130. The process adjusts the haptic output module 1150 based on the determination of module 1140. The haptic output completes at module 1160. The process may then terminate at module 1195.

Once haptic output is completed at module 1160, the process may restart with receipt of additional gesture input at a user-interface at module 1170. Haptic output then initiates at module 1180 based on adjusted output levels of previous iterations of process 1100 from module 1150. The process then proceeds through measurement input, determination of expectations, adjustment, and completion of output of modules 1130, 1140, 1150 and 1160. A gesture may not be long enough, or the gesture haptic response may not be long enough to allow for adjustment during the haptic output. However, the adjustment from one cycle to the next of the haptic output may allow for refined haptic output levels over time.

The types of input used to provide feedback may vary, and may originate from a wide variety of sensors or input devices. For example, the input sensor may sense user input, such as through a pointing device or a touchscreen. As another example, the input sensor may sense some aspect of the surrounding environment, such as audio input, and may thereby provide an indication of how loud a buzzer effect from a haptic output device is. An unexpectedly loud buzzer may indicate the presence of a resonant surface such as a wood table, whereas an unexpectedly quiet buzzer may indicate the presence of a dampening material, such as clothing or other fabric, for example. Moreover, sensor input may indicate orientation, motion, or other forms of interpreted information derived from sensor input data, which may in turn cause the process to alter the haptic effect output. A buzzer, as an example, may be strengthened in a situation where input data indicates a vertical orientation such as may occur in a pocket or holster, or may be weakened in a situation where Bluetooth communication suggests that a different alert through the Bluetooth communications link will better alert a user, for example.

Moreover, input data may indicate a situation where a haptic effect is not useful, such as when a device is detected as falling, in which case a haptic effect output may be cut off or otherwise adjusted, for example. Similarly, travel sensed as an input, such as travel by automobile, may suggest that a haptic effect should be suppressed in favor of an audible warning, or may indicate a haptic effect should be increased to deal with a typically noisier automobile environment. Input data may be used to indicate that a device is contained within a clothing pocket, located on a resonant surface, moving as a result of falling, being held in a human hand, contained in a bag, or contained in a briefcase, as examples.

Additionally, input data may take forms indirectly related to haptic output effects. For example, user input which reduces volume may suggest lowering magnitude of a buzzer. Alternatively, user input which appears to ignore a buzzer, such as continuing an action, may suggest increasing magnitude of a buzzer. As another example, lack of user input, which may be signaled in some form as a no input condition, or as an input condition a device or system understands as meaning no user input, may indicate that a buzzer magnitude should be increased.

In some situations, sensor input may include both input directly related to haptic effect output and other input information unrelated to the haptic effect output. An example of this includes a user input device, for example, which may be influenced by both user input and effects of haptic effect output. Another example may include a sensor which senses environmental information and also is affected by a haptic effect output. The determination of whether the sensor is providing data which suggests a change in the haptic effect output would involve filtering out or compensating for such sensor input data which is unrelated to the haptic effect output. Such sensor data may be used to determine the operating environment though, such as whether a device is in a pocket, on a table, or in a user hand, for example. It may also be used to recognize context, such as by indicating a user is providing input, and that a haptic effect will be felt in a more sensitive manner by the user. Sensors may include sensors such as the optical sensor of an optical mouse, a touch-sensitive user interface, buttons, or other user interface inputs, for example.

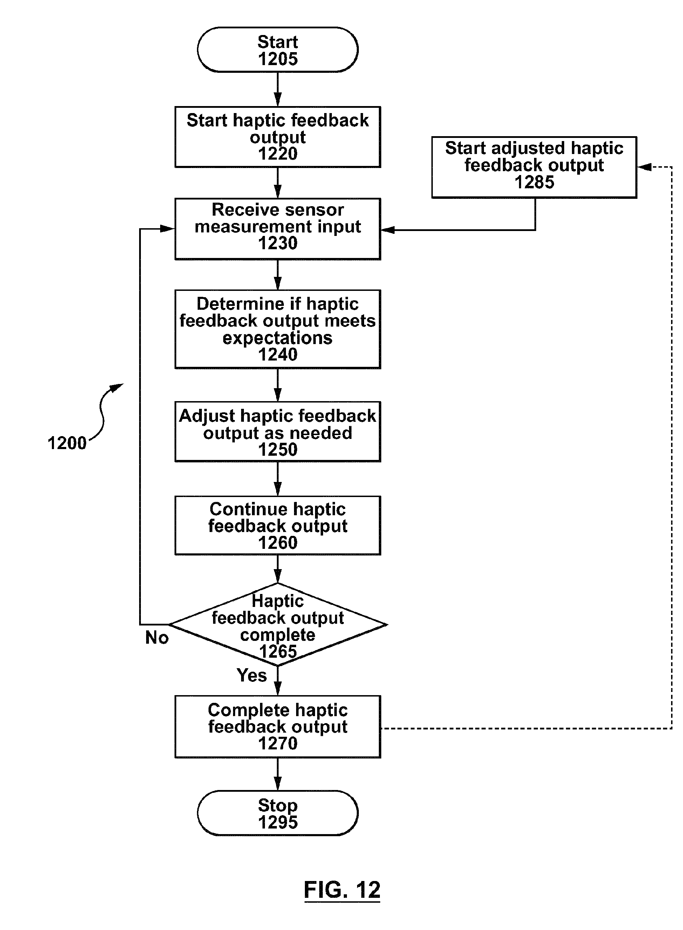

A device with a haptic effect output may provide haptic effects and receive responsive input. This may be input providing information about the environment in which the device operates, for example, or other information about the output, in contrast to explicit user input. Figure 12 illustrates an embodiment of a process of operating an apparatus including a haptic effect output device with feedback to the haptic effect output device. Process 1200 initiates at start module 1205. At module 1220, haptic output initiates. This haptic output may initiate responsive to user input of some form, or it may initiate responsive to some other event, such as expiration of a timer or receipt of a signal, for example. At module 1230, a sensor receives measurement input which is at least partially responsive to the haptic output of module 1220. This may involve input which has components responsive to other environmental factors as well, for example. The process then determines at module 1240 whether the haptic output of module 1220 meets expectations based on the measurement input of module 1230. Filtering out background noise or input components unrelated to haptic effect output of module 1220 may involve measurement over a substantial period of time, for example. The process adjusts the haptic output at module 1250 based on the determination of module 1240.

The haptic output continues at module 1260 based on the adjusted output of module 1250. The process determines at module 1265 whether the haptic output is complete. If so, the process ends the haptic output at module 1270. The process may initiate another haptic output at module 1285, based on the adjusted haptic output of module 1250, as if that haptic output had started at module 1220. The process then proceeds through measurement input, determination of expectations, adjustment, and continuation of output of modules 1230, 1240, 1250, 1260 and 1265 as before. The process may also terminate at module 1295. If the output was not complete at module 1265, the process returns to module 1230 and receives further measurement input. The process then cycles through modules 1240, 1250, 1260 and 1265 as necessary. Thus, the process may benefit over multiple cycles from measurements previously made, further refining output to achieve an appropriate level.

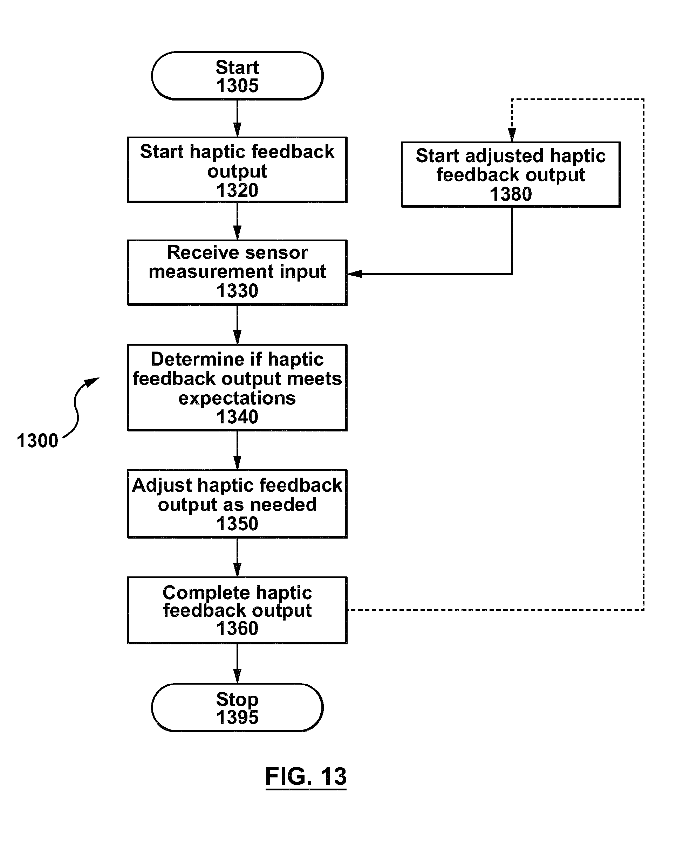

While the process 1200 of Figure 12 relates to continuous haptic effect outputs, the process 1300 of Figure 13 relates to more discrete haptic effect outputs. Figure 13 illustrates an embodiment of a process of operating an apparatus including a haptic effect output device with feedback to the haptic effect output device. This type of process may also provide better haptic effect outputs as a result of iterative adjustments to the haptic effect output over multiple separate instances of a haptic effect output, for example. Process 1300 initiates at module 1305. At module 1320, haptic output initiates. At module 1330, a sensor receives input at least partially responsive to the haptic output of module 1320. The same type of sensors used in conjunction with process 1200 may be used with process 1300. The process determines at module 1340 whether the haptic output of module 1320 meets expectations based on the sensor input of module 1330. The process adjusts the haptic output at module 1350, such as by changing a magnitude of the haptic effect output, for example. This adjustment occurs based on the determination of module 1340. The haptic output completes at module 1360. The process may then terminate at module 1395.

Once haptic output is completed at module 1360, the process may restart with a new occurrence of the haptic effect output. Haptic output initiates at module 1380 using adjusted output levels or parameters of previous iterations of process 1300 from module 1350. The process then proceeds through measurement input, determination of expectations, adjustment, and completion of output of modules 1330, 1340, 1350 and 1360. A single haptic output operation and sensor response may not last long enough to allow for adjustment during operation of the haptic output. However, the adjustment from one cycle to the next of the haptic output may allow for refined haptic output levels over time.

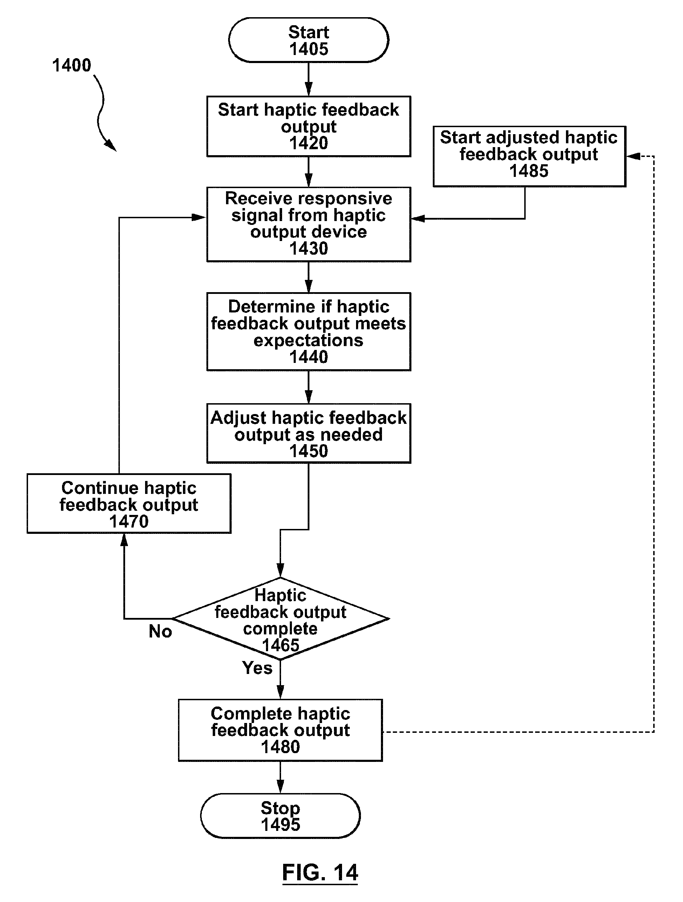

Haptic output may also be adjusted based on feedback from a haptic output device. Figure 14 illustrates an embodiment of a process of operating an apparatus including a haptic effect output device with feedback from the haptic effect output device. Process 1400 initiates at start module 1405. Haptic output initiates at module 1410. The haptic output device generates a responsive signal which is received by process 1400 at module 1430. This may be a response from the haptic output device indicating success or failure of operation, for example. Alternatively, this may be an input signal from a sensor of the haptic output device, with data from the input signal provided to the process 1400. The process determines at module 1440 whether the haptic output of module 1420 meets expectations based on the measurement input of module 1430. This may involve measurement over a substantial period of time to determine effects specific to the haptic output of module 1420, and thereby to filter out background noise. This may also involve measurement related to a short duration haptic output for determination of how to adjust haptic output for future haptic output actions.

The process adjusts the haptic output module 1450 based on the determination of module 1440. The process determines at module 1465 whether the haptic output is complete. If not, the process continues the haptic output at module 1470 and uses modules 1430, 1440, 1450 and 1465 to continue the process with adjustments as necessary. If the process determines the haptic output is complete at module 1465, the process then completes the haptic output at module 1480. The process may then terminate at module 1495. The process may also continue with initiation of haptic output again at module 1485, based on the adjusted haptic output.

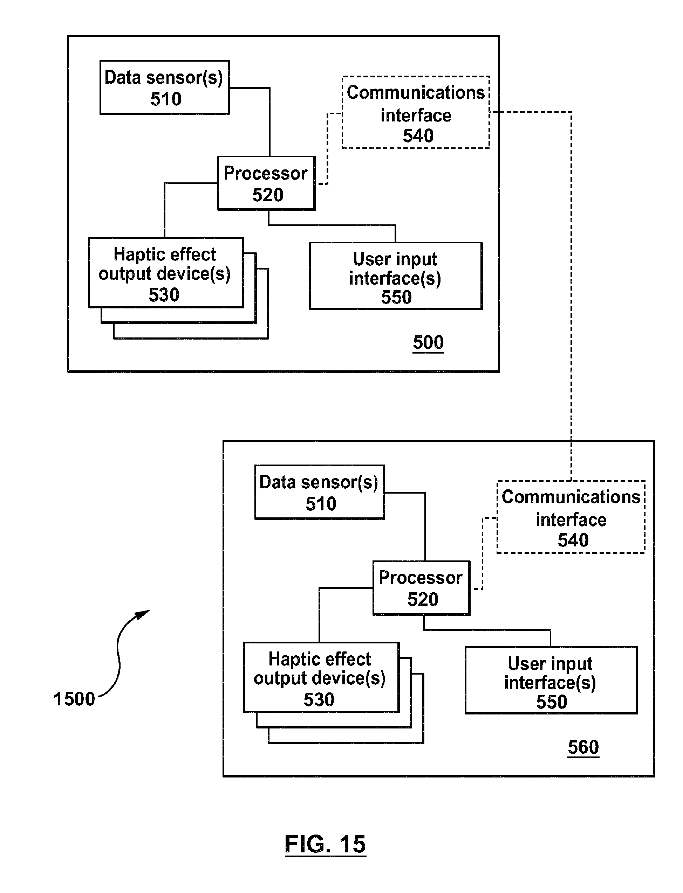

The processes illustrated above may be used with a variety of devices, or combinations of devices. A first device may initiate a haptic effect output with a second device using a sensor to receive input, and providing information about the sensor input to the first device, thereby allowing for adjustment of the haptic effect output. Figure 15 illustrates an embodiment of a system including multiple apparatuses with a haptic effect output device. System 1500 includes device 500 and device 560, each of which contain components such as those described with respect to device 500 of Figure 5. Other types of devices may be used in a similar manner, and different types of devices may be combined for such a system. In the system 1500, as an example, a haptic effect output device 530 of device 500 may be activated. A data sensor 510 of device 560 may receive input, some of which is related to the output of haptic effect output device 530 of device 500. Data from data sensor 510 of device 560 may be transmitted through communications interfaces 540 of devices 560 and 500, whereupon device 500 may determine whether the effects of haptic effect output device 530 of device 500 are appropriate. This may result in adjustment to operation or parameters of haptic effect output device 530 of device 500. Moreover, this may be used to adjust operation of other haptic effect output devices in one or both of devices 500 and 560 as well.

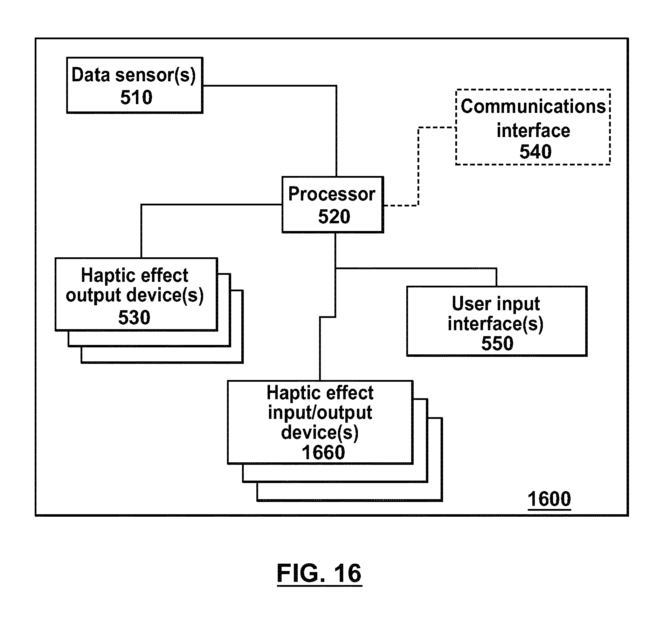

Additionally, the processes may involve embodiments where a haptic effect output device includes an input sensor as well as haptic effect output functionality. Figure 16 illustrates an embodiment of an apparatus including a haptic effect input and output device. Device 1600 is similar to device 500 of Figure 5, including data sensor(s) 510, processor 520, haptic effect output devices 530, communications interface 540 and user input interface(s) 550. Haptic effect input/output device(s) 1660 are also included in device 1600, coupled to processor 520. Devices 1660 provide haptic effect output, but also receive input through a sensor included as part of the each device 1660. Thus, one may expect haptic effect input/output devices 1660 to receive sensor input during operation of the haptic effect output function of each of devices 1660. This may allow for immediate feedback with a well-defined relationship to the haptic effect output which is meant to be adjusted by the processes described above.

One skilled in the art will appreciate that although specific examples and embodiments of the system and methods have been described for purposes of illustration, various modifications can be made without deviating from present invention. For example, embodiments of the present invention may be applied to many different types of objects or devices operating individually or in conjunction with other devices. Moreover, features of one embodiment may be incorporated into other embodiments, even where those features are not described together in a single embodiment within the present document.

## Claims

1. A method of generating a haptic output effect in an apparatus having a haptic effect output device, comprising:
initiating a first haptic effect output with the haptic effect output device;
receiving feedback data from an input sensor;
comparing feedback data from the input sensor to expected results of the first haptic effect output;
and
adjusting operating parameters of the haptic effect output device.

2. The method of claim 1, further comprising:
receiving input data from a user interface;
and
wherein the initiating a haptic effect occurs responsive to receiving input data for a user interface.

3. The method of claim 2, further comprising:
repeating the receiving input data, initiating the first haptic effect output, receiving feedback data, comparing feedback data, and adjusting operating parameters responsive to receiving further input data from the user interface.

4. A method of generating a haptic output effect in an apparatus having a haptic effect output device, comprising:
initiating a first haptic effect output with the haptic effect output device;
receiving feedback data from an input sensor;
comparing feedback data from the input sensor to expected results of the first haptic effect output;
adjusting operating parameters of the haptic effect output device;
terminating the first haptic effect output;
initiating a second haptic effect output with the haptic effect output device, the second haptic effect output occurring based on adjusted operating parameter of the haptic effect output device;
receiving feedback data from the input sensor;
comparing feedback data from the input sensor to expected results of the second haptic effect output;
and
adjusting operating parameters of the haptic effect output device.

5. The method of claim 4, further comprising:
receiving input data from a user interface;
and
wherein the initiating a first haptic effect occurs responsive to receiving input data from the user interface.

6. The method of claim 5, further comprising:
receiving an indication of lack of input from the user interface;
the teiminating the haptic effect output occurs responsive to the receiving an indication of lack of input.

7. The method of claim 6, further comprising:
receiving further input data from a user interface after termination of the first haptic effect output;
and
wherein the initiating a second haptic effect occurs responsive to receiving further input data from the user interface.

8. A haptic effect enabled device comprising:
a haptic effect output device;
a processor coupled to the haptic effect output device;
a sensor coupled to the processor, wherein the sensor configured to measure data including data resulting from operation of the haptic effect apparatus;
and
wherein the processor configured to manage the haptic effect output device and to receive data from the sensor and to determine an effect of the haptic effect output device on sensor readings and to adjust operation of the haptic effect output device responsive to the effect determined from sensor readings.

9. The device of claim 8, wherein the sensor is selected from one of the group comprising an accelerometer, an optical sensor, and a strain gauge.

10. The device of claim 8, wherein the haptic effect output device is selected from one or more of the group comprising an eccentric rotating mass, linear resonant actuator, a piezoelectric material, an electro-active polymer, a shape memory alloy, a deformable surface, an electrostatic friction device, an ultrasonic surface friction device, an ultrasonic haptic transducer, a combination of a haptic substrate and a deformable surface, or an air jet.

11. The device of claim 8, further comprising:
a user interface coupled to the processor;
and wherein the processor further configured to receive user input from the user interface and initiate haptic effect output of the haptic effect output device responsive to receipt of user input from the user interface.
